# EUROPÄISCHE PATENTSCHRIFT

(11) **EP 0 446 841 B1**
(45) Veröffentlichungstag und Bekanntmachung des Hinweises auf die Patenterteilung: **12.10.1994**
(21) Anmeldenummer: 91103698.6
(22) Anmeldetag: 11.03.1991
(51) Int. Cl.: F16L 55/128, F28F 11/02

(54) **Metallische Hülse zur Überbrückung einer Leckagestelle eines Rohres**
Metallic sleeve for bridging a leakage in a pipe
Manchon métallique pour ponter une fuite dans un tuyau

(30) Priorität: 15.03.1990 DE 4008252; 06.04.1990 DE 4011136
(43) Veröffentlichungstag der Anmeldung: 18.09.1991
(73) Patentinhaber: ABB Reaktor GmbH, D-68167 Mannheim (DE)
(72) Erfinder: Bäro, Günter, Dr., W-6940 Weinheim (DE); Russ, Jakob, W-6725 Römerberg (DE)
(74) Vertreter: Rupprecht, Klaus, Dipl.-Ing.

(56) Entgegenhaltungen:
- EP-A- 0 047 407
- EP-A- 0 137 984
- EP-A- 0 248 728
- EP-A- 0 291 003
- FR-A- 2 608 727
- US-A- 4 723 578
- PATENT ABSTRACTS OF JAPAN vol. 12, no. 428 (M-762)(3275) 11 November 1988,& JP-A-63 161395 (SUMITOMO METAL) 05 Juli 1988,
- PATENT ABSTRACTS OF JAPAN vol. 11, no. 1 (M-550)(2448) 07 Februar 1987,& JP-A-61 180895 (HITACHI) 13 August 1986,
- PATENT ABSTRACTS OF JAPAN vol. 9, no. 29 (M-356)(1752) 07 Februar 1985,& JP-A-59 173696 (HITACHI SEISAKUSHO) 01 Oktober 1984,

## Beschreibung

Die Erfindung betrifft eine metallische Hülse zur Überbrückung einer Leckagestelle eines Rohres, die mit Hilfe der Aufweittechnik an die Innenwandfläche des Rohres anlegbar ist.

Eine derartige Hülse ist aus der EP-A-0 047 407 bekannt. Dort weist die Hülse in der Nähe ihres oberen und unteren Endes einen mit einer Zahnung versehenen Teilbereich auf. Nachdem in einem ersten Schritt durch hydraulische Aufweitung dieser Bereiche die Zahnung in die Rohrwand eingedrungen ist, wird in einem zweiten Schritt der zwischen den Zahnungen liegende Bereich ebenfalls hydraulisch aufgeweitet. Der dabei in axialer Richtung auftretende Schrumpfvorgang soll die Verbindung zwischen dem Rohr und der Hülse im Bereich der Verzahnung unterstützen.

Bei dem Aufweitvorgang entsteht auf Grund der unterschiedlichen elastischen Rückfederung der verformten Materialien, die unter anderem auf den unterschiedlichen Verformungswegen von Rohr und Hülse beruht, ein Spalt von ca. 5 bis 10 µm zwischen dem Rohr und der Hülse. Eine Leckage muß daher in geringen Mengen in Kauf genommen werden. Soll die Leckage vollständig unterbunden werden, ist seither die Verschweißung der Hülsenenden mit dem Rohr erforderlich.

Die Schweißung stellt eine Wärmebehandlung dar, die zu unerwünschten Spannungen führen kann und außerdem den Zeitaufwand der Rohrreparatur erhöht. Ferner sind Korrosionserscheinungen im Spalt nicht abzusehen.

Ferner ist aus der deutschen Zeitschrift gwf-Gas/Erdgas (1975), Heft 10, Seiten 412 bis 417 eine Einrichtung zur Sanierung von Stemmuffenleitungen bekannt. Im Bereich der Stemmuffe wird die undichte Stelle mit Hilfe einer klebstoffbeschichteten Alu-Trägerfolie abgedichtet. Mit einer aufblasbaren Membrane wird die Alu-Folie bis zur Erzielung der Klebeverbindung an der Rohrinnenwand zur Anlage gebracht. Der Einsatz von Klebstoff gestattet die Verwendung des bekannten Verfahrens nur dort, wo der Klebstoff durch das in der Rohrleitung strömende Medium nicht angegriffen wird.

Aus dem Patents Abstracts of Japan vol. 12, No. 428 (M 762) (3275) 11. November 1988, JP-A-63-161395 ist ein Verfahren zur Reparatur eines Wärmetauscherrohres bekannt. Dort ist eine die Leckagestelle des Rohres überbrückende Hülse an ihren Enden mit je einer Ringnut versehen, in die ein Hohlring aus einer Formgedächtnislegierung eingelegt ist. Nach dem Einbringen der Hülse in das zu raparierende Rohr werden die Ringe erwärmt, um beim Zurückgehen in ihre ursprüngliche Forn eine Dichtwirkung zwischen Hülse und Rohr zu erzielen. Vor dem Erwärmen erfolgt kein Aufweiten der Hülse und der ihr zugeordneten Ringe, so daß wegen der Toleranzen in der Rohrfertigung der größte Toleranzbereich einschließlich des Einbaubeispieles von der Formgedächtnislegierung überbrückt werden muß. Die Ringe aus der Formgedächtnislegierung müssen daher eine entsprechend große Wanddicke aufweisen, um den maximalen Spalt zuverlässig überbrücken zu können. Die dafür vorzusehende Nuttiefe kann zu einer unerwünschten Schwächung der Hülse führen.

Es stellt sich die Aufgabe, den bei der eingangs genannten metallischen Hülse durch Rückfederung nach erfolgter Aufweitbewegung entstandenen Spalt leckagedicht zu verschließen.

Gelöst wird diese Aufgabe erfindungsgemäß dadurch, daß in vorgebbaren Abständen in die Mantelfläche der Hülse Bauteile aus einer Formgedächtnislegierung eingelassen sind, die beim Erreichen einer vorgebbaren Temperatur eine Dichtung zwischen der Hülse und dem Rohr darstellen, daß die Mantelfläche zwischen den Bauteilen eine Oberflächenrauheit mit einer Profiltiefe zwischen 0,02 und 0,05 mm aufweist, daß die Bauteile und die aufgerauhte Mantelfläche mit dem gleichen Durchmesser versehen sind, wobei die Oberflächenhärte der aufgerauhten Mantelfläche größer ist als die Oberflächenhärte des zu behandelnden Rohres.

Das Bauteil aus einer Formgedächtnislegierung führt die Aufweitbewegung der Hülse mit aus, so daß nach Beendigung des Aufweitvorganges und der erfolgten Rückfederung ein Spalt zwischen der Hülse bzw. dem Bauteil aus der Formgedächtnislegierung und dem Rohr vorhanden ist. Bei Erwärmen des Rohres auf eine vorgegebene Temperatur deutlich unterhalb der Betriebstemperatur wird die auf diese Betriebstemperatur eingestellte Formgedächtnislegierung auf Grund des Formgedächtniseffektes aufgeweitet, um eine Dichtung zwischen Hülse und Rohr herzustellen. Trotz relativ kleiner Aufweitkräfte pro Flächeneinheit genügt wegen der großen Profilfläche bereits eine Eindringtiefe von maximal 0,05 mm zur Erzielung einer zuverlässige Verbindung. Ein dünnes Band von ca. 0,2 mm Wandstärke reicht daher bereits als Bauteil aus

Nach einer anderen Lösung der Aufgabe ist vorgesehen, daß die Hülse umfangsseitig einen spiralförmig ausgebildeten Bauteil aus einer Formgedächtnislegierung trägt, der beim Erreichen einer vorgebbaren Temperatur eine Dichtung zwischen der Hülse und dem Rohr darstellt, daß der Außendurchmesser der Spirale größer ist als der Außendurchmesser der Hülse und daß die Räume zwischen den Spiralwindugen des Bauteiles mit einer den Überstand ausgleichenden Schicht versehen sind.

Durch das Ausfüllen der Räume zwischen den Windungen wird das unerwünschte Eindringen von Flüssigkeit verhindert.

Gemäß einer bevorzugten Ausgestaltung ist die besagte Schicht über den spiralförmigen Bauteil erstreckt.

Anhand einiger Ausführungsbeispiele wird die erfindungsgemäße Hülse und deren vorteilhafter Einsatz beschrieben.

Dabei zeigen die
- Fig. 1: eine in den Rohrbereich oberhalb des Rohrbodens eines Wärmetauschers eingesetzte Hülse,
- Fig. 2: eine im Bereich des Rohrbodens und oberhalb des Rohrbodens eingesetzte Hülse,
- Fig. 3: die Einzelheiten "X" der Figuren 1 und 2 vor dem Aufweitvorgang in einem größeren Maßstab und
- Fig. 4: eine andere Hülsenausbildung.

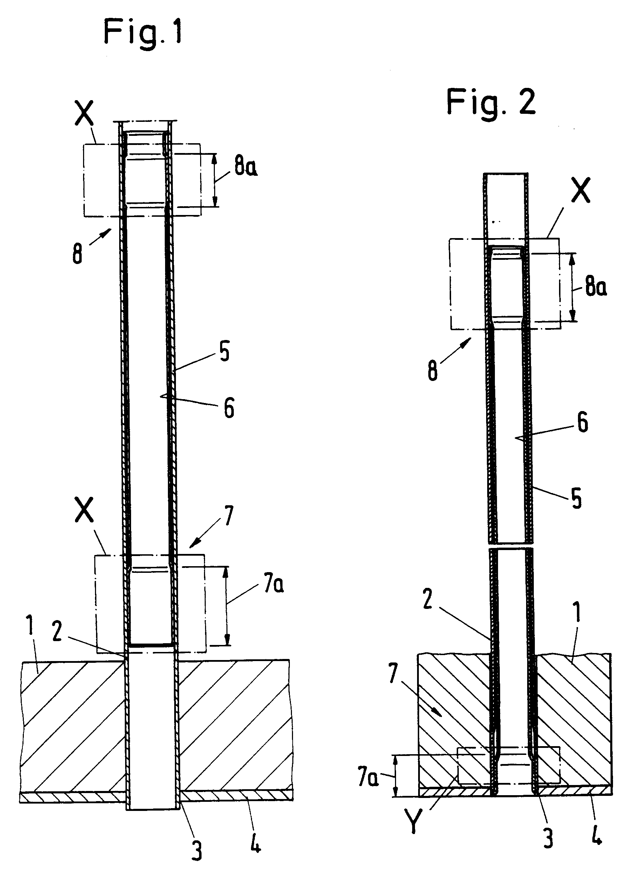

Die Figur 1 zeigt den Teilbereich eines Rohrbodens 1 eines nicht weiter dargestellten Wärmetauschers. In dem Rohrboden endet eine Vielzahl von Rohren 2, wovon nur eines dargestellt ist. Das Rohr 2 ist über eine Schweißnaht 3 mit einer Plattierung 4 des Rohrbodens 1 verbunden. Zur Überbrückung einer Leckagestelle 5 des Rohres 2 ist eine Hülse 6 in das Rohr 2 eingebracht und an ihren Endbereichen 7, 8 durch Aufweiten mit einem oberhalb des Rohrbodens 1 befindlichen Bereich des Rohres 2 verbunden. Insbesondere wenn die Hülse 6 in einem Bereich außerhalb des Rohrbodens 1 zum Beispiel hydraulisch aufgeweitet wird, tritt eine unterschiedliche Rückfederung von Rohr 2 und Hülse 6 auf, die sich in einem Spalt von ca. 5 bis 10 µm ausdrückt, der sich an den aufgeweiteten Endbereichen 7, 8 zwischen dem Rohr 2 und der Hülse 6 nach der Beendigung des Aufweitvorganges einstellt.

Nach der Figur 2 ist die Hülse 6 mit ihrem einen Endbereich 7 im Bereich des Rohrbodens 1 und mit ihrem anderen Endbereich 8 im Bereich außerhalb des Rohrbodens aufgeweitet.

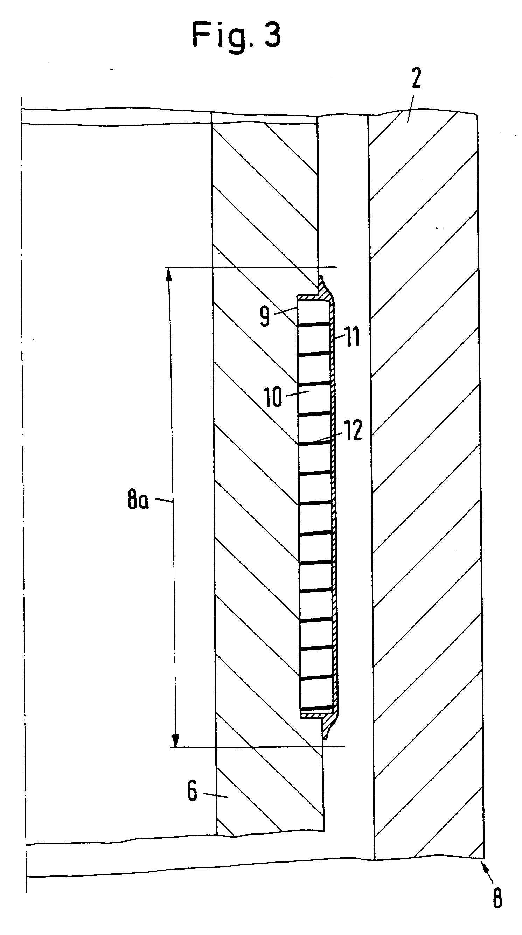

Die in einem größeren Maßstab dargestellte Figur 3 zeigt die Ausbildung der Endbereiche 7 und 8 nach der Figur 1 und des Endbereiches 8 nach der Figur 2 (Einzelheit "X") der Hülse 6 vor ihrer Aufweitung. Der Aufweitbereich 8a (7a in Figur 1) weist eine ca. 0,2 mm tiefe Freidrehung 9 auf, in die ein als Blechband 10 ausgbildetes Bauteil aus einer Formgedächtnislegigung spiralförmig eingelegt ist. Eine ca. 0,2 mm dicke Schicht 11 überdeckt den spiralförmigen Bauteil. Der Spalt zwischen dem Rohr 2 und der Schichtaußenseite beträgt vor dem Aufweiten 0,3 mm. Nach dem Aufweitvorgang, der in der Figur 3 nicht dargestellt ist, erfolgt die vorgehend erläuterte Rückfederung, die zu einer Spaltbreite von ca. 5 bis 10 µm zwischen dem Rohr 2 und der Hülse 6 führt. Die Eigenschaft der Formgedächtnislegierung ist so gewählt, daß sie sich bei Erreichen der Betriebstemperatur des Wärmetauschers derart ausgedehnt hat, daß unter Zwischenlage der Schicht 11 eine den

Spalt überbrückende und dichtende Verbindung mit dem Rohr 2 entsteht. Die Schicht 11 bewirkt bei einem als Blechband 10 ausgebildeten Bauteil aus der Formgedächtnislegierung neben dessen korrosionsschützende Abdeckung ein Verschluß eines Raumes 12 zwischen den Spindelwindungen gegen Leckageeintritt. Ein Leckagemedium könnte zum Beispiel in den Raum 12 an einem Ende eindringen und dann entlang der spiralförmigen Windungen, die den Raum 12 begrenzen, den Aufweitbereich in Achsrichtung der Hülse durchsetzen. Kann auf den korrosionsschützenden Überzug verzichtet werden, so reicht das Einbringen der Schicht 11 lediglich in den Raum 12 zur Vermeidung eines Leckagedurchtrittes aus. Die Schicht 11 übergreift dabei also nicht das Blechband 10.

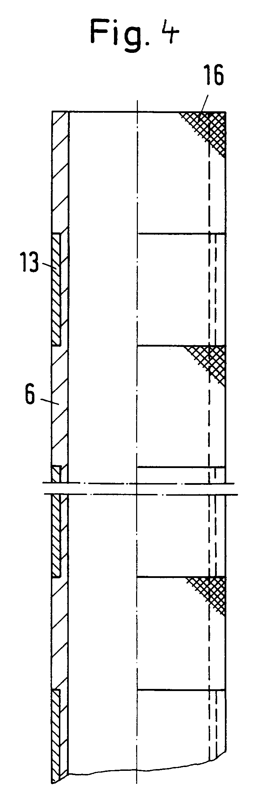

Die Ausbildung nach der Figur 3 ist für die Einzelheiten "X" nach den Figuren 1 und 2 (Aufweitung außerhalb des Rohrbodens 1) einsetzbar, während die Ausbildung nach Figur 4 darüberhinaus auch für den in den Rohrboden erstreckten Hülsenbereich (Fig. 2, Einzelheit Y) verwendbar ist.

Die als Halbschnitt dargestellte Figur 4 läßt in einem größeren Maßstab die feinporige Struktur einer Profilierung 16 erkennen, die in Form einer kreuzförmig übereinander laufenden Rändelung ausgeführt sein kann. Durch relativ kleine Aufweitbereiche pro Flächeneinheit gelingt die Verbindung mit dem Rohr 2, da wegen der großen Profilfläche eine Eindringtiefe von maximal 0,05 mm für eine zuverlässige Verbindung ausreicht Dabei ist bei einer Profiltiefe zwischen 0,02 und 0,05 mm die Oberflächenhärte der profilierten Mantelfläche größer als die Oberflächenhärte der Rohrinnenwand. Die geringen Aufweitkräfte schließen daher auch Rohrschäden aus, wenn die Hülse 6 oberhalb des Rohrbodens 1 aufgeweitet ist. Die feinporige Struktur der Profilierung 16 ist durch ringförmige

Bauteile 13 aus einer Formgedächtnislegierung unterbrochen, die in vorgebbaren Abständen in die Mantelfläche der Hülse 6 eingelassen sind. Der mit einer Profilierung 16 versehene Bereich weist denselben Außendurchmesser auf wie die Bauteile 13. Die Dicke der Bauteile 13 ist zur besseren Darstellung größer dargestellt. Sie beträgt in der Regel ca. 0,2 mm, so daß diese Beuteile als Blechband ausgebildet sein können. Nach erfolgter Aufweitung der Hülse und nach Erreichen einer vorgebbaren Temperatur werden die Bauteile 13 den durch die Rückfederung bedingten Spalt überbrücken und absolut gegen Leckage abdichten.

## Patentansprüche

1. Metallische Hülse (6) zur Überbrückung einer Leckagestelle (5) eines Rohres (2) die mit Hilfe der Aufweittechnick an der Innenwandfläche des Rohres (2) anlegbar ist, **dadurch gekennzeichnet,** daß in vorgebbaren Abständen in die Mantelfläche der Hülse (6) Bauteile (13) aus einer Formgedächtnislegierung eingelassen sind, die beim Erreichen einer vorgebbaren Temperatur eine Dichtung zwischen der Hülse (6) und dem Rohr (2) darstellen, daß die Mantelfläche zwischen den Bauteilen (13) eine Oberflächenrauheit mit einer Profiltiefe zwischen 0,02 und 0,05 mm aufweist, daß die Bauteile und die aufgerauhte Mantelfläche mit dem gleichen Außendurchmesser versehen sind wobei die Oberflächenhärte der aufgerauhten Mantelfläche größer ist als die Oberflächenhärte des zu behandelnden Rohres.

2. Metallische Hülse (6) zur Überbrückung einer Leckagestelle (5) eines Rohres (2), die mit Hilfe der Aufweittechnik an die Innenfläche des Rohres (2) anlegbar ist, dadurch gekennzeichnet, daß die Hülse (6) umfangseitig einen spiralförmig ausgebildeten Bauteil aus einer Formgedächtnislegierung trägt, der beim Erreichen einer vorgebbaren Temperatur eine Dichtung zwischen der Hülse (6) und dem Rohr (2) darstellt, daß der Außendurchmesser der Spirale größer ist als der Außendurchmesser der Hülse (6) und daß die Räume (12) zwischen den Spiralwindungen des Bauteils mit einer den Überstand ausgleichenden Schicht (11) versehen sind.

3. Metallische Hülse nach Anspruch 2, dadurch gekennzeichnet, daß die Schicht (11) über den spiralförmigen Bauteil erstreckt ist.

## Claims

1. Metallic sleeve (6) which serves to bridge a leak (5) in a tube (2) and which can be applied by the expansion method against the inside wall surface of the tube (2), characterised in that there are inserted into the circumferential surface of the sleeve (6), at predeterminable intervals, components (13) of a shape memory alloy, which on reaching a predeterminable temperature form a seal between the sleeve (6) and the tube (2), in that the circumferential surface between the components (13) has a surface roughness with a profile depth between 0.02 and 0.05 mm, in that the components and the roughened circumferential surface are given the same diameter, while the surface hardness of the roughened circumferential surface is greater than the surface hardness of the tube which is to be treated.

2. Metallic sleeve (6) which serves to bridge a leak (5) in a tube (2) and which can be applied by the expansion method against the inside surface of the tube (2), characterised in that the sleeve (6) carries on its periphery a spirally shaped component made of a shape memory alloy and forming a seal between the sleeve (6) and the tube (2) when a predeterminable temperature is reached, in that the outside diameter of the spiral is larger than the outside diameter of the sleeve (6), and that the spaces (12) between the turns of the spiral on the component are provided with a coating (11) equalizing their projection.

3. Metallic sleeve according to Claim 2, characterized in that the coating (11) extends over the spiral component.

## Revendications

1. Manchon (6) métallique pour le pontage d'un emplacement de fuite (5) sur un tube (2), ce manchon pouvant être appliqué par la technique d'expansion contre la face intérieure de la paroi du tube (2), caractérisé par le fait qu'à des intervalles susceptibles d'être prédéterminés, des composants (13) en un alliage à mémoire de forme sont enchâssés dans la surface extérieure du manchon (6), composants qui établissent une étanchéité entre le manchon (6) et le tube (2) lorsqu'une température susceptible d'être prédéterminée est atteinte, que la surface extérieure présente, entre les composants (13), une rugosité superficielle avec une profondeur de profilage comprise entre 0,02 et 0,05 mm, et que les composants et la surface extérieure rugueuse présentent le même diamètre extérieur, la dureté superficielle de la surface extérieure rugueuse étant plus grande que la dureté superficielle du tube à traiter.

2. Manchon (6) métallique pour le pontage d'un emplacement de fuite (5) sur un tube, ce manchon pouvant être appliqué par la technique d'expansion contre la surface intérieure du tube (2), caractérisé par le fait que le manchon (2) porte extérieurement un composant en hélice en un alliage à mémoire de forme qui, lorsqu'une température susceptible d'être prédéterminée est atteinte, établit une étanchéité entre le manchon (6) et le tube (2), que le diamètre extérieur de l'hélice est plus grand que le diamètre extérieur du manchon (6) et que les espaces (12) entre les spires de l'hélice du composant sont munis d'une couche (11) compensant le dépassement.

3. Manchon métallique suivant la revendication 2, caractérisé par le fait que la couche (11) s'étend par-dessus le composant en hélice.
